# EUROPÄISCHE PATENTANMELDUNG

(11) **EP 0 676 251 A2**
(43) Veröffentlichungstag der Anmeldung: **11.10.1995**
(21) Anmeldenummer: 95810136.2
(22) Anmeldetag: 02.03.1995
(51) Int. Cl.: B21D 22/10, B21D 15/10, B21D 51/36

(54) **Verfahren zum Dekorieren von Aluminiumtuben und nach diesem Verfahren hergestellte Aluminiumtube**

(30) Priorität: 08.04.1994 CH 1046/94
(71) Anmelder: H. Obrist & Co. AG, CH-4153 Reinach (CH)
(72) Erfinder: Bösch, Karl, CH-4202 Duggingen (CH)
(74) Vertreter: Wenger, René

(57) **Zusammenfassung**

Der Tubenmantel (2) einer Aluminiumtube (1) wird ggf. zusätzlich zu einem bestehenden Druck (10) mit einer Strukturierung (11) versehen. Die Strukturierung wird dabei von einem Prägedorn abgezeichnet, der in den Tubenmantel geschoben wird und auf dessen Aussenmantel die Strukturierung angebracht ist. Mit einem Presswerkzeug mit einer gummielastisch verformbaren Oberfläche wird der Tubenmantel von aussen nach innen gegen den Prägedorn gepresst .

## Beschreibung

Die Erfindung betrifft ein Verfahren zum Dekorieren von Aluminiumtuben gemäss dem Oberbegriff von Anspruch 1.

Aluminiumtuben als Verpackung für pastöse Produkte aller Art sind seit langem bekannt und gebräuchlich. Die verschiedenen Herstellungsverfahren sind dem Fachmann bekannt und werden daher nicht näher erläutert. Seit derartige Tuben in vermehrtem Masse auch in der Kosmetikbranche Anwendung finden, wird auch der Aussendekoration grössere Aufmerksamkeit geschenkt. Es sind verschiedene Verfahren zum Bedrucken/oder Lackieren des Aussenmantels bekannt.

Bei Tuben aus Kunststoffmaterial war es bisher auch bekannt, alternativ oder zusätzlich zum Bedrucken eine Dekoration in der Form einer reliefartigen Struktur anzubringen. Ein derartiges Verfahren ist beispielsweise in der DE-A 36 30 788 oder in der EP-A 532 812 beschrieben. Die Strukturierung des Tubenmantels erfolgt durch geeignete Verformungswerkzeuge unter Wärmezufuhr. Derartige Verfahren eignen sich jedoch nicht für die Dekoration von Aluminiumtuben und es war denn auch bisher nicht bekannt, an Aluminiumtuben eine reliefartige Struktur anzubringen.

Es ist daher eine Aufgabe der Erfindung, ein Verfahren zum Dekorieren von Aluminiumtuben zu schaffen, bei dem der Tubenmantel ganz oder teilweise reliefartig strukturiert wird, ohne dass die Materialstruktur beschädigt wird und ohne dass Falten, Blasen oder dergleichen entstehen können. Diese Aufgabe wird erfindungsgemäss mit einem Verfahren gelöst, das die Merkmale in Anspruch 1 aufweist.

Dieses Verfahren hat den grossen Vorteil, dass die Tubenherstellung nach konventionellen Verfahren erfolgen kann. Dazu gehört das Fliesspressen aus einer Rondelle, dass Weichglühen, ggf. eine Innenlackierung und das Bedrucken und/oder Lackieren des Aussenmantels. Das Presswerkzeug mit der gummielastisch verformbaren Oberfläche bewirkt eine Deformation des Tubenmantels von aussen nach innen, wobei der Mantel gegen die Strukturierung des Prägedorns gepresst wird. Der Tubenmantel wird auf diese Weise im Umfang geringfügig gestaucht und die Vertiefungen im Prägedorn bilden sich als Vertiefungen auf der Aussenseite des Tubenmantels ab. Auf diese Weise können auch kleinste Strukturänderungen auf dem Prägedorn abgebildet werden. Der Effekt ist dabei etwa der gleiche wie bei "Rubbelbildern", bei denen durch Druck die Oberfläche eines darunterliegenden Bildes sichtbar gemacht wird.

Die Strukturierung des Prägedorns erfolgt vorzugsweise durch Aetzen, wobei derartige Aetzverfahren aus der Drucktechnik bereits seit langem bekannt sind. Der Aussenmantel des Prägedorns könnte aber auch durch Fräsen, Giessen oder dergleichen strukturiert werden.

Durch die nachträgliche Strukturierung des Tubenmantels können je nach Bedarf verschiedene Effekte erzielt werden. Einerseits lässt sich dadurch das ästhetische Aussehen der Tube vorteilhaft verbessern, indem bei entsprechender Strukturierung kleinere Transportschäden wie z.B. Beulen oder Knicke weniger auffallen. Die Tubenoberfläche wird durch die Strukturierung aber auch wesentlich griffiger, was z.B. bei Arbeiten mit feuchten Händen wie etwa beim Umgang mit Reinigungsmitteln oder mit Haarshampoo ein wesentlicher Vorteil ist. Schliesslich können bei entsprechender Ausbildung des Prägedorns auch bestimmte Materialoberflächen wie z.B. Leder, Holz, Textilien und vieles mehr imitiert werden. Insbesondere bei Tuben mit einer vollflächigen Verformung an der Mantelstruktur von weniger als 50% Verformung pro Flächeneinheit wird vorzugsweise wenigstens eine Presswalze mit einem elastischen Belag von aussen gegen den Tubenmantel gepresst, wobei der Prägedorn und die Presswalze synchron gedreht werden. Eine derartige Presswalze führt eine bestimmte Walkarbeit aus, die im Verlauf von einer oder von mehreren Umdrehungen zur Deformation des Tubenmantels führt. Der elastische Belag, beispielsweise aus Kautschuk oder aus Kunststoffmaterial, muss eine ausreichende Härte haben, damit sich der Tubenmantel verformen lässt. Er sollte aber auch weich genug sein, damit er sich auch kleinsten Strukturformen vollständig anpasst.

Als besonders vorteilhaft hat sich die Verwendung von zwei Presswalzen erwiesen, welche derart gegen den Tubenmantel gepresst werden, dass ihre Achsen auf der gleichen, durch die Tubenachse verlaufenden Ebene liegen. Unabhängig von der Anzahl der verwendeten Presswalzen ist es wichtig, dass sich Prägedorn und Presswalzen synchron bewegen, damit keine Reibkräfte zwischen dem Tubenmantel und dem Prägedorn auftreten können.

Besonders vorteilhaft wird zur Verformung aber auch eine Manschette mit einem elastischen Innenmantel über den Tubenmantel geschoben, wobei der Innenmantel hydraulisch oder pneumatisch gegen den Tubenmantel gepresst wird. Die Deformation erfolgt dabei nicht nur abschnittweise, wie bei den Presswalzen, sondern konzentrisch und gleichmässig am ganzen Umfang. Dadurch bleibt der Glanz auf der Tubenaussenseite erhalten und eine allenfalls vorhandene Innenlackierung wird geschont. Auch verfahrenstechnisch lässt sich eine derartige Druckmanschette relativ einfach und ohne Zeitverlust in eine Produktionslinie integrieren. Die Druckmanschette kann bei einem Taktstopp über den Tubenmantel gefahren werden und fährt dann einen ganzen Taktschritt mit, wobei die Deformation erfolgt. Beim nächsten Taktstopp wird die Druckmanschette abgezogen und wiederum auf die nächstfolgende Tube aufgefahren.

Zum Lösen der deformierten Tube vom Prägedorn wird der Tubenmantel vorzugsweise mit Pressluft gebläht und dabei abgezogen.

Mit den beiden beschriebenen Herstellungsverfahren können zylindrische und konische Tuben bearbeitet werden.

Die Erfindung betrifft auch eine nach dem erwähnten Verfahren hergestellte Aluminiumtube mit den Merkmalen von Anspruch 7. Zur Erzielung einer besseren Griffigkeit und eines guten Erscheinungsbildes hat sich insbesondere eine orangenhautartige Strukturierung mit porenartigen Vertiefungen bewährt.

Ausführungsbeispiele der Erfindung sind in den Zeichnungen dargestellt und werden nachstehend genauer beschrieben. Es zeigen:
- Figur 1: eine Anordnung zum Dekorieren einer Tube mittels Presswalzen in Achsenrichtung gesehen,
- Figur 2: eine Draufsicht auf die Anordnung gemäss Figur 1,
- Figur 3: die Anordnung gemäss Figur 1 bei der Deformation des Tubenmantels,
- Figur 4: eine Draufsicht auf die Anordnung gemäss Figur 3,
- Figur 5: eine Anordnung zur Dekoration eines Tubenmantels mittels Pressmanschette vor der Deformation,
- Figur 6: die Anordnung gemäss Figur 5 während der Deformation, und
- Figur 7: die Darstellung einer gefüllten Tube mit strukturierter Oberfläche.

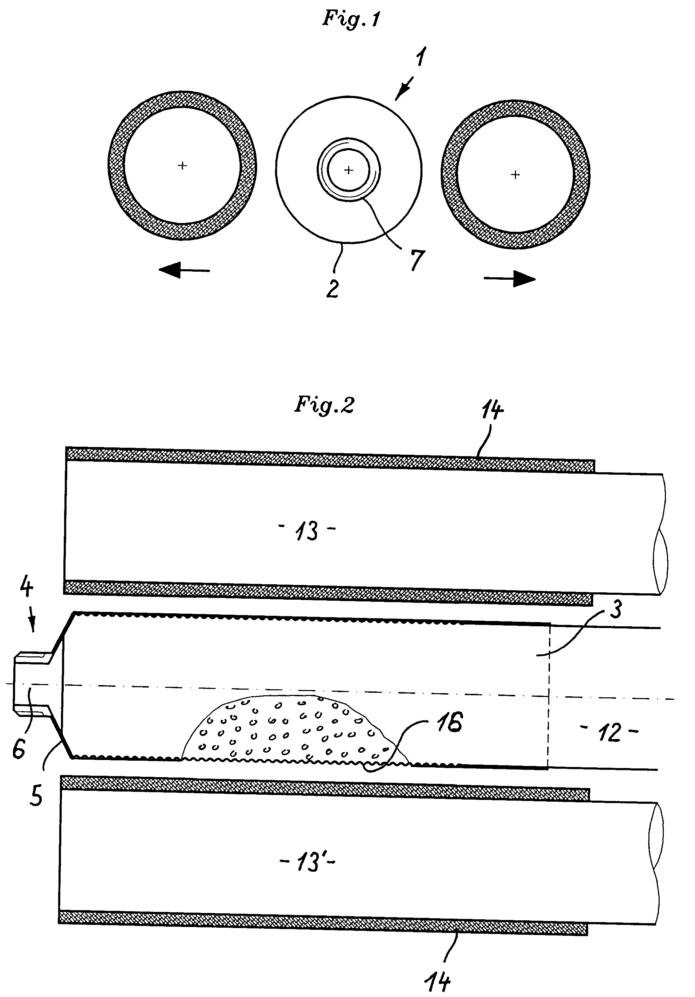

Die Figuren 1 und 2 zeigen eine Aluminiumtube 1, welche nach konventionellen Verfahren hergestellt wurde. Die Tube weist einen etwa zylindrischen Tubenmantel 2 auf, der auf einer Seite mit einer Einfüllöffnung 3 und auf der anderen Seite mit einem angeformten Tubenkopf 4 versehen ist. Der Tubenkopf setzt sich zusammen aus einer Schulter 5 und aus einem Hals 6, der mit einem Schraubgewinde 7 versehen ist. Zum Anbringen einer sich über den ganzen Umfang des Tubenmantels erstrekkenden Strukturierung wird der Tubenmantel 2 über einen Prägedorn 12 geschoben. Der Prägedorn hat einen Aussendurchmesser, der nur geringfügig z.B. 0,1 mm, kleiner ist als der Innendurchmesser des Tubenmantels. Auf dem Prägedorn 12 ist eine Strukturierung 16 angebracht.

Auf einer durch die Tubenmittelachse führenden Ebene beweglich gelagert sind zwei Presswalzen 13 und 13' angeordnet, die auf der Aussenseite einen gummielastischen Belag 14 aufweisen.

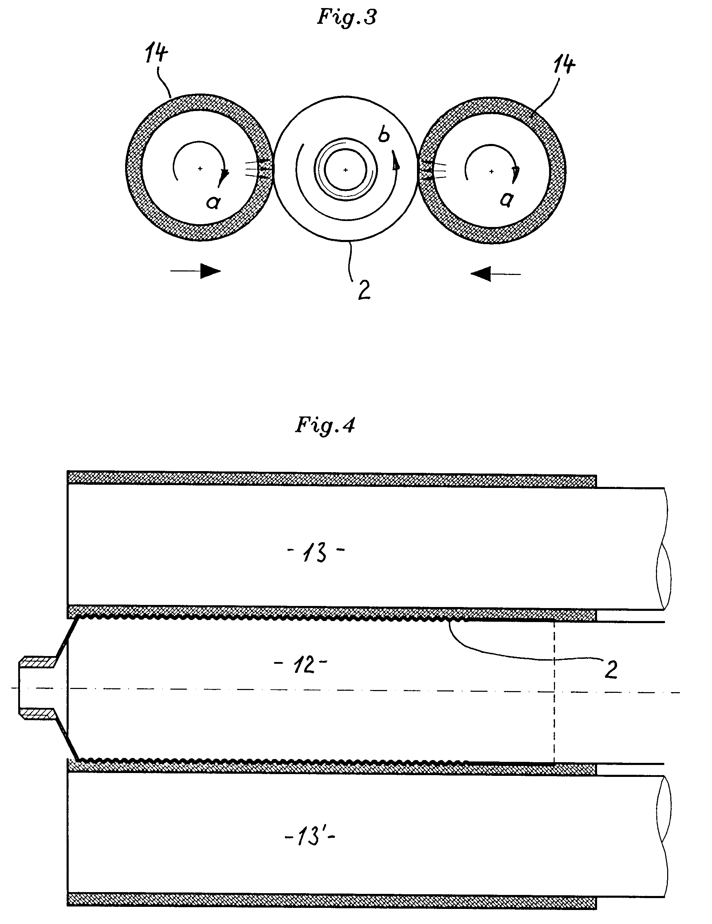

Wie aus den Figuren 3 und 4 ersichtlich ist, werden die beiden Presswalzen 13 und 13' gegeneinander bzw. gegen den Tubenmantel und den darin eingeführten Prägedorn gepresst. Die Presswalzen drehen sich in Pfeilrichtung a und der Prägedorn mit dem Tubenmantel dreht sich in Pfeilrichtung b. Im Verlaufe von wenigstens einer halben Umdrehung wird der Tubenmantel gegen die Strukturierung 16 am Prägedorn gepresst, wobei sich die Strukturierung auf der Aussenseite des Tubenmantels abbildet.

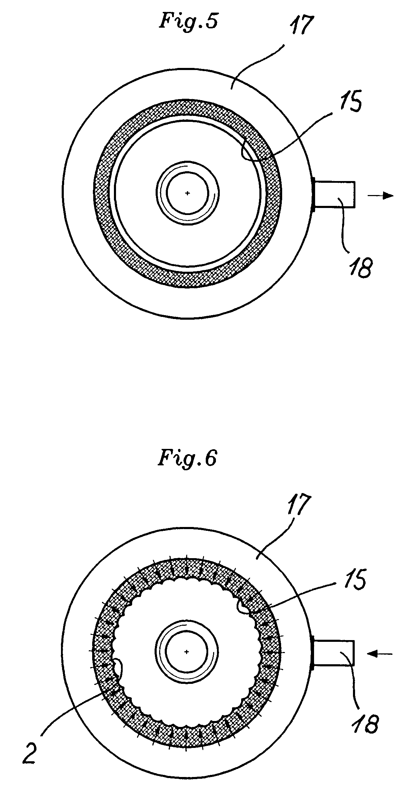

Beim Verfahren gemäss den Figuren 5 und 6 wird ein Hohlzylinder 17 über den Tubenmantel geschoben, der sich über die gesamte Länge der zu dekorierenden Partie erstreckt. Wie beim vorhergehenden Ausführungsbeispiel wurde vorher ein Prägedorn in den Tubenmantel geschoben. Der Hohlzylinder 17 ist auf der Innenseite mit einer gummielastischen Manschette 15 versehen, welche über ein Ventil 18 hydraulisch oder pneumatisch unter Druck gesetzt werden kann. Bei einer Druckbeaufschlagung kann sich die Manschette nur konzentrisch nach innen ausweiten, wobei sie sich formschlüssig um den Tubenmantel legt und diesen gegen die Strukturierung am Prägedorn presst. Zum Lösen der Manschette wird der Druck abgelassen und der Hohlzylinder entfernt.

Dieses Verfahren hat zudem den Vorteil, dass keine Drehantriebe und entsprechende Lagerstellen erforderlich sind. Die Deformation kann gefahrlos mit einem Druck von beispielsweise 100 bar erfolgen.

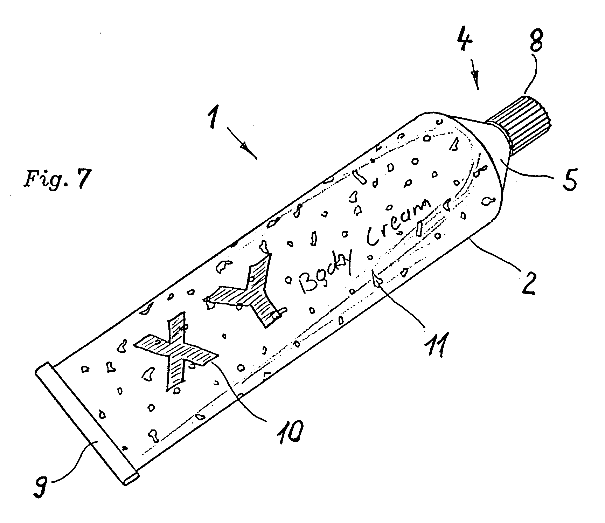

Figur 7 zeigt eine gefüllte Tube 1, bei welcher die Einfüllöffnung 3 nach dem Einbringen des Füllgutes durch einen Bund 9 verschlossen ist. Am Tubenkopf 4 ist ein Tubendeckel 8 aufgeschraubt. Die Schulter 5 der Tube bleibt blank ohne Dekoration. Der Tubenmantel 2 ist sowohl mit einem Druck 10 als auch mit einer Strukturierung 11 versehen, welche orangenhautartige Poren oder Vertiefungen aufweist. Auf ähnliche Weise könnte die Strukturierung auch eine holzartige Maserung oder einer lederartige Narbung aufweisen.

## Patentansprüche

1. Verfahren zum Dekorieren von Aluminiumtuben (1) mit einem rotationssymmetrischen Tubenmantel (2), der auf einer Seite mit einer Einfüllöffnung (3) und auf der anderen Seite mit einem verschliessbaren Tubenkopf (4) versehen ist, dadurch gekennzeichnet, dass ein Prägedorn (12) von der Einfüllöffnung her in die Tube eingeschoben wird, der an seinem Aussenmantel ganz oder teilweise reliefartig strukturiert ist und der den Tubenmantel ausfüllt, und das anschliessend ein Presswerkzeug mit einer gummielastisch verformbaren Oberfläche gegen den Aussenmantel der Tube gepresst wird, bis der Tubenmantel (2) durch Kaltverformung dauernd die Struktur des Prägedorns (12) annimmt.

2. Verfahren nach Anspruch 1, dadurch gekennzeichnet, dass wenigstens eine Presswalze (13) mit einem elastischen Belag (14) von aussen gegen den Tubenmantel gepresst wird und dass der Prägedorn (12) und die Presswalze (13) synchron gedreht werden.

3. Verfahren nach Anspruch 2, dadurch gekennzeichnet, dass zwei Presswalzen (13, 13') gegen den Tubenmantel gepresst werden, deren Achsen auf der gleichen, durch die Tubenachse verlaufenden Ebene liegen.

4. Verfahren nach Anspruch 1, dadurch gekennzeichnet, dass eine Manschette (15) mit einem elastischen Innenmantel über den Tubenmantel geschoben wird und dass der Innenmantel hydraulisch oder pneumatisch gegen den Tubenmantel (2) gepresst wird.

5. Verfahren nach einem der Ansprüche 1 bis 4, dadurch gekennzeichnet, dass der Tubenmantel nach der Deformation mit Pressluft gebläht und vom Prägedorn abgezogen wird.

6. Verfahren nach einem der Ansprüche 1 bis 5, dadurch gekennzeichnet, dass der Tubenmantel vor der Strukturierung auf der Aussenseite bedruckt und/oder lackiert wird.

7. Aluminiumtube hergestellt nach dem Verfahren nach Anspruch 1, mit einem rotationssymmetrischen Tubenmantel (2), der auf einer Seite mit einer Einfüllöffnung (3) und auf der anderen Seite mit einem verschliessbaren Tubenkopf (4) versehen ist, dadurch gekennzeichnet, dass der Tubenmantel ganz oder teilweise durch Kaltverformung reliefartig strukturiert ist.

8. Tube nach Anspruch 7, dadurch gekennzeichnet, dass der Tubenmantel eine orangenhautartige Strukturierung mit porenartigen Vertiefungen aufweist.
